# EUROPÄISCHE PATENTSCHRIFT

(11) **EP 1 190 211 B1**
(45) Veröffentlichungstag und Bekanntmachung des Hinweises auf die Patenterteilung: **06.04.2005**
(21) Anmeldenummer: 00927045.5
(22) Anmeldetag: 26.04.2000
(51) Int. Cl.: G01B 11/24

(54) **VERFAHREN ZUR OPTISCHEN FORMERFASSUNG VON GEGENSTÄNDEN**
METHOD FOR OPTICALLY DETECTING THE SHAPE OF OBJECTS
PROCEDE DE SAISIE OPTIQUE DES FORMES D'OBJET

(30) Priorität: 30.04.1999 DE 19919963
(43) Veröffentlichungstag der Anmeldung: 27.03.2002
(73) Patentinhaber: Wagner, Christoph, Dr., 76227 Karlsruhe (DE)
(72) Erfinder: Wagner, Christoph, Dr., 76227 Karlsruhe (DE)
(74) Vertreter: Gleiss, Alf-Olav, Dr.jur. Dipl.-Ing.
(86) Internationale Anmeldenummer: PCT/EP2000/003706
(87) Internationale Veröffentlichungsnummer: WO 2000/066973

(56) Entgegenhaltungen:
- WO-A-97/05449
- GB-A- 2 328 280
- US-A- 3 840 739
- US-A- 4 791 482

## Beschreibung

Die Erfindung betrifft ein optisches Stereoverfahren zur Formerfassung von dreidimensionalen Gegentänden.

In vielen Bereichen der industriellen Produktion und im Bereich von Multimedia-Anwendungen werden heute Verfahren benötigt, um geometrische, dreidimensionale Daten eines Gegenstandes mit Hilfe von geeigneten Messeinrichtungen in numerische Daten auf einem Computer zu wandeln. Dies kann zum Zweck der Qualitätskontrolle oder auch mit dem Ziel erfolgen, diese Gegenstände einem menschlichen Beobachter realistisch dreidimensional darzubieten. Es besteht außerdem großes Interesse, Objekte automatisiert zu erfassen und im Internet zu übertragen und zu visualisieren.

Optische Verfahren zur Formerfassung von Objekten lösen immer mehr die bisher verwendeten mechanisch abtastenden Verfahren ab. Ein großer Vorteil der optischen Verfahren besteht darin, dass die Messung berührungslos und damit ohne mechanische Beeinflussung des Objektes abläuft. Ein weiterer Vorteil ist darin zu sehen, dass eine große Anzahl von Gegenstandspunkten gleichzeitig erfasst werden kann, was zur einer Verkürzung der Messzeit führt.

Aus der Patentschrift US 4,791,482 ist ein Verfahren zur optischen Formerfassung eines dreidimensionalen Gegenstandes bekannt, bei dem der Gegenstand, eine Lichtquelle und eine Kamera im Raum positioniert werden. Der Gegenstand wird durch die Lichtquelle beleuchtet und ein Bild des Gegenstandes wird aufgenommen. Die Ebene des Gegenstandes und ihre Normale können aus einer vorbekannten Beziehung zwischen dem Bild in der Bildebene und der vorbekannten Größe einer Lichtquelle, die insbesondere L-förmig ausgeführt ist, berechnet werden. Mittels der Oberflächennormalen wird der Gegenstand lokalisiert. Die Erfassung des gesamten Gegenstandes erfolgt mittels Scannen.

Aus der Patentanmeldung WO 97/05449 sind eine Vorrichtung und ein Verfahren zum Scannen eines Gegenstandes bekannt, wobei das Scannen der Ermittlung eines Computermodells des Gegenstandes dient. Beim Scannen des Objekts werden Daten von einer Vielzahl von Oberflächenpunkten des Gegenstandes erfasst. Ferner wird die Position der Scanvorrichtung gemessen. Aus den Daten werden sogenannte Zwischendatenstrukturen ermittelt. Diese Zwischendatenstrukturen werden zur Modellbildung miteinander kombiniert. Die Scanvorrichtung enthält Mittel für einen manuellen Betrieb. Die Daten können an zwei oder mehr Punkten simultan aufgenommen werden.

Aus der Patentanmeldung GB 2 328 280 A ist ein Verfahren zur Verarbeitung überlappender 2D-Bilder eines Gegenstandes bekannt, die von verschiedenen, beabstandeten Blickpunkten aufgenommen wurden. Jedes 2D-Bild entspricht einer bestimmten Region des Gegenstandes. Die 2D-Bilder werden digital verarbeitet, um die entsprechenden Regionen zu korrelieren. Bei der digitalen Verarbeitung werden eine Mehrzahl von epipolaren Linien verwendet, um die Suche nach einer entsprechenden Region in einem anderen Bild zu beschränken.

Bekannte Formerfassungsverfahren basieren meist auf dem Triangulationsprinzip, dem Stereoprinzip oder auf interferometrischen Techniken.

Bei einem bekannten Triangulationsverfahren wird ein Lichtpunkt auf die Oberfläche des zu vermessenden Objektes projiziert und aus einer von der Beleuchtungsrichtung abweichenden Richtung beobachtet. Die Koordinaten des beleuchteten Punktes können aus der Kenntnis der Orientierung des Projektionsstrahls im Raum und der Richtung, aus der der beobachtete Punkt wahrgenommen wird, berechnet werden. Das Verfahren ist zwar genau und eindeutig, da die Oberfläche des zu vermessenden Gegenstandes aber Punkt für Punkt abgetastet werden muss, ist es langsam. Außerdem können nur solche Punkte der Oberfläche erfasst werden, die sowohl vom Ort der Lichtquelle als auch einer beobachtenden Kamera direkt sichtbar sind. Ein durch eine solche Messung erhaltener Datensatz ist daher niemals vollständig. Zwar können mehrere Datensätze durch wiederholte Messungen mit unterschiedlichen Beobachtungs- beziehungsweise Beleuchtungsperspektiven gewonnen werden, um aber die Form des Gegenstandes in seiner Gesamtheit zu erfassen, müssen diese Datensätze jedoch in eine geometrische Beziehung zueinander gestellt werden (Matching), wofür häufig noch der Eingriff eines menschlichen Benutzers erforderlich ist. Darüber hinaus treten beim Matching auch die Nahtstellen der Datensätze unangenehm in Erscheinung, da die einzelnen Datensätze selten perfekt zur Deckung miteinander gebracht werden können. Als Artefakte können Kanten und Sprünge entstehen, die nicht nur die Genauigkeit der Daten beeinträchtigen, sondern vor allem auch für einen Betrachter visuell störend auffallen. Das menschliche Auge ist in der Lage, bereits geringste Erhebungen und Einbuchtungen in der Oberfläche eines visualisierten oder realen Gegenstandes zu erkennen. Neben der Lage eines Punktes im Raum kann der Mensch auch die Neigung der Oberfläche aus den Beleuchtungsverhältnissen erschließen. Geringe Variationen des Ortes können bereits eine große Veränderung der Neigung hervorrufen, wodurch auch kleinste Unregelmäßigkeiten einem menschlichen Beobachter auffallen. Dies ist im übrigen ein grundsätzliches Problem der meisten Verfahren zur dreidimensionalen Formerfassung. Die Aufnahme von Messdaten ist in den meisten Fällen nicht an diesen Umstand angepasst, so dass schon ein geringes Rauschen der Daten sehr störend für den Betrachter wirkt. Dies gilt auch für die im folgenden beschriebenen bekannten Verfahren.

Weiterentwickelte, auf der Triangulation beruhende Verfahren, sind die Lichtschnitttechnik und die Streifenprojektion. Bei ersterer wird anstatt eines einzelnen Punktes eine Linie auf die Oberfläche des zu vermessenden Gegenstandes projiziert. Diese Linie wird aus einer von der Beleuchtungsrichtung abweichenden Richtung beobachtet. Die Raumkoordinaten der beleuchteten Punkte werden in gleicher Weise wie oben erwähnt gewonnen. Dieses Verfahren ist zwar schneller als die punktweise Triangulation, aber immer noch langsamer als andere Verfahren, die eine ganze Fläche auf einmal erfassen können. Auch hier sind mehrere Messungen unter verschiedenen Perspektiven und deren Matching nötig, um zu einer vollständigen Darstellung des Gegenstands zu gelangen.

Bei der Streifenprojektion handelt es sich um eine Weiterentwicklung der Lichtschnitttechnik, bei der mehrere Linien gleichzeitig auf die Oberfläche des zu vermessenden Gegenstandes projiziert werden. Die Intensität dieser Linien variiert periodisch in lateraler Richtung und macht die einzelnen Linien für die Beobachtungskamera unterscheidbar. Das Verfahren ist zwar schnell, aber auch hier ist es nötig, mehrere Messungen durch Matching zusammenzufügen, so dass auch hier die vorstehend erwähnten Kanten und Sprünge entstehen können.

Für hochgenaue Messungen werden häufig interferometrische Verfahren eingesetzt. Auch bei ihnen besteht das Problem, dass die Ergebnisse mehrerer Einzelmessungen zusammengefügt werden müssen, um zu einer vollständigen dreidimensionalen Darstellung des Messgegenstandes zu kommen. Darüber hinaus sind diese Verfahren sehr empfindlich gegenüber kleinsten Erschütterungen und können meist nur im Laborbetrieb genutzt werden.

Eine weiter Gruppe von Verfahren beruht auf dem Stereoprinzip. Dabei macht man sich die Tatsache zu Nutze, dass zwei Ansichten eines Gegenstandes, die unter verschiedenen Blickwinkeln aufgenommen wurden, Information über die dreidimensionale Gestalt enthalten. Man spricht hier von einem binokularen Stereoverfahren. Mit Hilfe von Softwarealgorithmen werden korrespondierende Merkmale des Objektes in den beiden Aufnahmen identifiziert. Die unterschiedliche Lage des Merkmals in den beiden Bildern stellt ein Maß für die Tiefe des Merkmals im dreidimensionalen Raum dar. Die Hauptaufgabe beim binokularen Stereo ist es, die Korrespondenz von Merkmalen zu ermitteln. Eine Methode besteht darin, kleine Bilcausschnitte miteinander zu vergleichen auf der Grundlage deren Helligkei-tsstruktur. Dabei treten zwei Schwierigkeiten auf. Haben Bildausschnitte keine markanten Helligkeitsstrukturen, können sie nicht einander zugeordnet werden. Dies bedeutet, dass die räumliche Tiefe von Objektpunkten nur in strukturierten Bereichen des Objektes ermittelt werden kann. Darüber hinaus ist die Helligkeit, genauer Leuchtdichte, eines Objektes nicht gleich für unterschiedliche Blickwinkel. Das kann ebenfalls dazu führen, dass keine Tiefe ermittelt werden kann.

Das binokulare Stereoprinzip kann von zwei Ansichten auf mehrere Ansichten erweitert werden. Dies liefert weitere Information und macht die Korrespondenzanalyse zuverlässiger, in vielen Fällen jedoch noch nicht ausreichend.

Eine weitere Gruppe von Stereoverfahren nutzt unterschiedliche Beleuchtungsbedingungen, um die Form von Gegenständen zu ermitteln. Anders als beim binokularen Stereo bleibt der Blickwinkel fest und die Beleuchtungsrichtung ändert sich. Man spricht daher von einem photometrischen Stereoverfahren. Aus den Helligkeiten unter den einzelnen Beleuchtungsrichtungen kann man auf die Neigung der Objektoberfläche schließen. Man misst in diesem Fall also nicht die räumliche Tiefe, sondern eine Größe, die deren Ableitung bildet. Photometrische Stereoverfahren sind gut geeignet, lokale Objektstrukturen zu messen, globale Strukturmessungen sind allerdings mit Fehlern behaftet. Eine globale Objektstruktur lässt sich besser mit einem Verfahren bestimmen, das die räumliche Tiefe selbst misst, beispielsweise also einem binokularen Stereoverfahren.

Die vorstehend erwähnten Verfahren weisen somit den Nachteil auf, dass nicht in allen Fällen zusammengehörige Bildpunkte auf unterschiedlichen Bildern eindeutig einander zugeordnet werden können. Man spricht dabei von dem Korrespondenzproblem.

Aufgabe der Erfindung ist es daher, ein Verfahren zur optischen Formerfassung anzugeben, bei dem das Korrespondenzproblem zumindest weitestgehend vermieden ist.

Gelöst wird diese Aufgabe mit einem Verfahren, das die in Anspruch 1 genannten Merkmale aufweist. Mit diesem Verfahren können sowohl globale als auch die lokale Objektstrukturen genau erfasst werden. Diese beiden Prinzipien sind übrigens auch beim menschlichen Gesichtssinn in starkem Maß beteiligt, um die Gestalt eines Gegenstandes zu erfassen. Deshalb sind Messungen möglich, die nicht nur unter metrischen, sondern auch unter visuellen Aspekten der Wirklichkeit äußerst nahe kommen.

Für die Korrespondenzanalyse beim erfindungsgemäßen Verfahren müssen also nicht Helligkeitswerte benutzt werden, sondern man kann auf Neigungswerte zurückgreifen. Neigungswerte sind anders als Helligkeitswerte nämlich invariant gegenüber der Blickrichtung. Das Korrespondenzproblem wird mithin beim erfindungsgemäßen Verfahren insbesondere dadurch gelöst, dass die Oberflächenormale eines Flächenpunkts am Gegenstand aus verschiedenen Blickrichtungen ermittelt wird. Bildpunkte mit denselben Flächennormalen sind somit leicht und schnell einander eindeutig zuordenbar.

Darüber hinaus ist für das vorgeschlagene Verfahren keine explizite Matching-Prozedur nötig. Dadurch werden Artefakte an den Nahtstellen von Einzelaufnahmen vermieden.

Das vorgeschlagene erfindungsgemäße Verfahren umfasst folgende Schritte:
a) Positionieren des Gegenstandes 1, mindestens einer Lichtquelle 2 und mindestens einer Kamera 3 im Raum in mehreren Stellungen,
b) Erfassen der jeweiligen Stellung des Gegenstandes Gi, der Lichtquelle Li und der Kamera Ki,
c) Beleuchten des Gegenstandes 1 durch die Lichtquelle 2 in den Stellungen Gi, Li, Ki,
d) Aufnehmen von Bildern 4 des Gegenstandes 1 in den Stellungen Gi, Li, Ki,
e) Ermitteln der zugehörigen Oberflächennormalen 5 von jeweiligen Qbejektpunkten 7 des Gegenstandes 1 aus den den Stellungen Gi, Li, Ki entsprechenden Bildern 4, wobei zur Ermittlung einer Oberflächennormalen 5 an einem Objektpunkt 7 beim Aufnehmen der Bilder 4 der Blickwinkel konstant gehalten und die Beleuchtungsrichtung verändert wird,
f) Zuordnung korrespondierender Bildpunkte 6 von unter verschiedenen Blickwinkeln aufgenommenen Bildern 4 mit Hilfe der zugehörigen, einander entsprechenden Oberflächennormalen 5,
g) Ermitteln der dreidimensionalen Form des Gegenstandes in den Stellungen Gi, Li, Ki mittels der einander entsprechenden Oberflächennormalen 5 von korrespondierenden Bildpunkten 6.

Weitere Ausgestaltungen ergeben sich aus den Unteransprüchen.

Die Erfindung wird nachfolgend anhand von Ausführungsbeispielen mit Bezug auf die Zeichnung näher erläutert. Es zeigen:
- Figur 1: schematisch eine Vorrichtung zur optischen Formerfassung von Gegenständen und
- Figur 2: eine tragbare Vorrichtung zur optischen Formerfassung von Gegenständen.

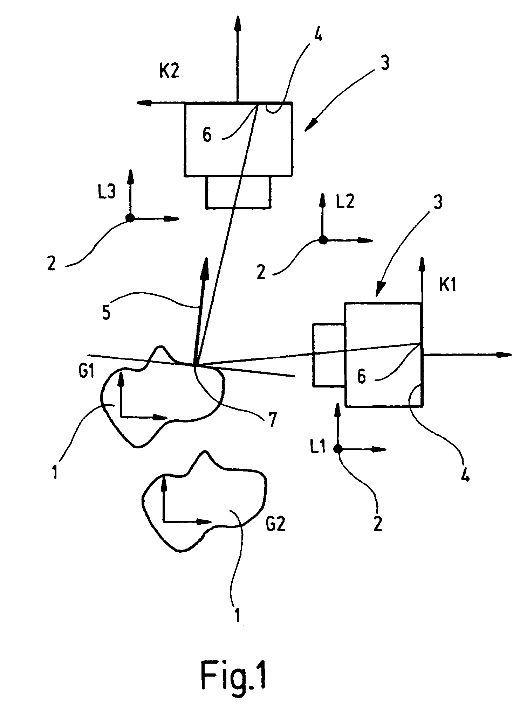

Ein zu vermessender dreidimensionaler Gegenstand 1 wird in die Stellungen G1, G2, ...Gi, zumindest eine Lichtquelle 2 in die Stellungen L1, L2, L3, ...Li und die Kamera 3 in die Stellungen K1, K2, ...Ki gebracht (siehe Figur 1). Dies kann durch zumindest eine Verlagerungsvorrichtung erfolgen, z.B. eine Verschiebeeinheit, ein Förderband, einen Drehtisch oder einen an sich bekannten Roboter. Diese Option ist sehr gut geeignet für automatisierte Messvorgänge an einer Vielzahl von gleichartigen Gegenständen 1. Ebenso ist es möglich, dass ein Benutzer Gegenstand 1, Lichtquelle 2 und Kamera 3 nach Belieben frei im Raum positioniert. Tragbare, handgeführte Formerfassungssysteme sind von großem Interesse, wenn es um die Vermessung von Einzelobjekten geht, die große Flexibilität erfordern. Ebenso sind Kombinationen aus mechanischer Führung und freier Handhabung denkbar. So kann z.B. eine Lichtquelle 2 starr an der Kamera 3 montiert sein (Spezialfall der mechanischen Führung), die Einheit aus Kamera 3 und Lichtquelle 2 aber frei beweglich sein. Auch ist es denkbar, mehrere fest montierte Lichtquellen 2 zu verwenden, die nacheinander benutzt werden, was dem Positionieren einer einzelnen Lichtquelle 2 in verschiedenen Stellungen gleichkommt. Analog dazu können auch mehrere Kameras 3 verwendet werden, was dem Positionieren einer einzigen Kamera 3 in verschiedenen Stellungen entspricht. Ebenso können mehrere Gegenstände 1 einbezogen werden.

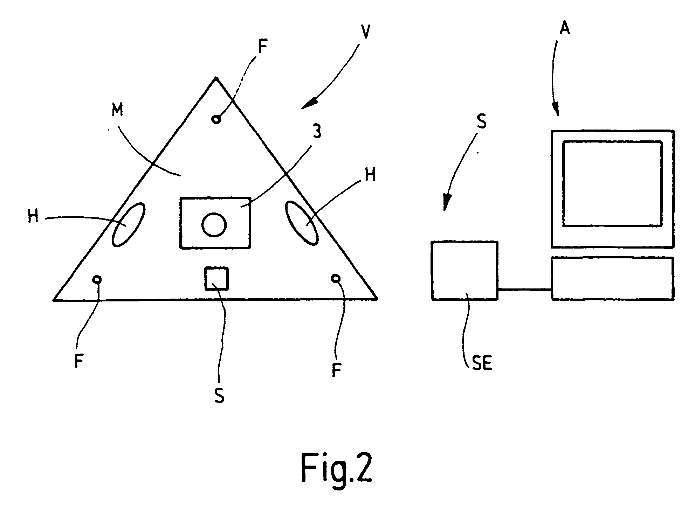

Für den weitern Ablauf der Messung ist es von Bedeutung, die Stellung des Gegenstandes 1 (Gi), der Lichtquelle 2 (Li) und der Kamera 3 (Ki) zu kennen. Einerseits kann die Stellung Gi, Li bzw. Ki implizit gegeben sein. Liegt eine mechanische Führung vor, so ist die Lage beziehungsweise Stellung Gi, Li und Ki nämlich durch die Geometrie der Führung gegeben. Am Beispiel einer computergesteuerten Verschiebeeinheit (nicht dargestellt) ist leicht zu erkennen, dass die Stellung der Ansteuereinheit bekannt ist und von dieser übernommen werden kann. Bei ortsfester Montage des Gegenstandes 1, der Lichtquelle 2 oder der Kamera 3 kann die Lage einmal bestimmt und für alle weitern Messungen übernommen werden. Andererseits kann Gi, Li und Ki durch explizite Messung bestimmt werden. Dieser Fall ist besonders für handgeführte Messeinrichtungen zu betrachten. Dies kann durch einen zusätzlichen Sensor S erfolgen, der die Stellung Gi, Li bzw. Ki verfolgt. Solche Sensoren S werden industriell hergestellt und arbeiten beispielsweise nach photogrammetrischen, trägheitsbasierten, Ultraschall- oder auch magnetischen Prinzipien. Das Prinzip der Messung soll am Beispiel eines magnetisch arbeitenden Sensors S (Figur 2) näher beschrieben werden. Das Magnetsensorsystem besteht aus einem ortsfest montierten Sender SE und vorzugsweise mehreren Empfängern E, die am Gegenstand 1, der Lichtquelle 2 bzw. der Kamera 3 befestigt werden können. Dem Sender SE und den Empfängern E kann jeweils ein eigenes kartesisches Koordinatensystem zugeordnet werden. Die Lage Gi des Gegenstandes 1 ist nun gegeben durch die Beziehung zwischen Senderkoordinatensystem und Empfängerkoordinatensystem des Gegenstandes 1. Entsprechendes gilt für Lichtquelle 2 und Kamera 3. Die Beziehung zweier Koordinatensysteme zueinander kann beschrieben werden durch eine Koordinatentransformation. Für das Positionieren von starren Körpern im Raum besitzt diese Koordinatentransformation genau sechs Freiheitsgrade, drei für die Verschiebung in den drei Raumrichtungen und weitere drei für die Drehung im Raum. Es gibt eine Reihe von Möglichkeiten, eine Verschiebung und Drehung anzugeben. Die Verschiebung kann durch einen Vektor mir drei Dimensionen gegeben sein, die Drehung durch die Angabe dreier sogenannter "Eulerwinkel". Andere Darstellungen der Drehung sind möglich, wie z.B. die Angabe von sog. "Quaternionen".

Eine weitere Form der Darstellung beruht auf der Matrizenschreibweise. Hier kann man die sogenannte "Drehmatrix" angeben. Lagesensoren mit sechs Freiheitsgraden liefern als Messwert die Koordinatentransformation meist in Form einer Translation und Drehung in einer der oben genannten oder davon abgeleiteten Darstellungen. Dieses Gebiet soll nicht weiter vertieft werden, es soll nur deutlich werden, dass alle benötigten Messwerte zur Verfügung gestellt werden können.

Die Lichtquelle 2, die den zu vermessenden Gegenstand 1 ausleuchtet, wird vorzugsweise nahezu punktförmig gewählt. Dies bietet den Vorteil, dass das nachfolgend beschriebene photometrische Stereoverfahren einfach durchzuführen ist. Als Lichtquelle denkbar sind z.B. Blitzlampen, Halogenlampen, externe Lichtquellen 2 mit Glasfasern oder Leuchtdioden großer Leistung.

Als Kamera 3 wird vorzugsweise eine elektronisch arbeitende Kamera 3 verwendet, deren Bilder 4 auf einfache Weise von einem an sich bekannten Computer aufgenommen und weiterverarbeitet werden können. Vorzugsweise handelt es sich um eine digitale Kamera 3. Für ausgewählte Kombinationen von Stellungen Gi, Li und Ki wird jeweils ein einzelnes Bild 4 aufgenommen. Aus den bekannten Stellungen Gi, Li und Ki sowie den Bildern 4 wird anschließend die sogenannte "Oberflächennormale" 5 eines Punktes 7 des Gegenstandes 1 bestimmt. Unter der Oberflächennormale 5 versteht man einen Vektor, der senkrecht steht auf einem Flächenelement 7 der Oberfläche des Gegenstands 1. Er ist ein gebräuchliches Maß für die Lage, Orientierung bzw. Neigung der Oberfläche im Raum. Es gibt eine Reihe von Methoden, die erfolgreich eingesetzt werden, um die Neigung von Oberflächen auf optischem Weg zu ermitteln. Eine grundlegende Methode, die "photometrisches Stereoverfahren" genannt wird, kann für das beschriebene Verfahren eingesetzt werden. Beim photometrischen Stereo bleiben sowohl Kamera 3 als auch Gegenstand 1 zunächst am selben Ort, während eine Lichtquelle 2 verschiedene Stellungen im Raum einnimmt. In jeder dieser Stellungen wird ein Bild 4 aufgenommen. In vielen Fällen ist es günstig, genau drei Stellungen der Lichtquelle 2 zu wählen, da hiermit die Oberflächennormale 5 eindeutig bestimmt ist. Zum Bestimmen von drei Unbekannten, nämlich den drei Komponenten des Normalenvektors, sind genau drei Beleuchtungsrichtungen notwendig. Vorzugsweise wird man nicht eine Lichtquelle 2 in drei Stellungen bringen, sondern, wird drei verschiedene Lichtquellen 2 verwenden und jeweils mit einer von Ihnen den Gegenstand 1 beleuchten. Vorzugsweise sind die drei Lichtquellen 2 fest an der Kamera 3 montiert (siehe Figur 2). Nun werden die in den Bilder 4 festgehaltenen Lichtintensitäten und die Stellungen Gi, Li und Ki so verknüpft, dass man als Ergebnis die Oberflächennermale 5 des Flächenpunktes 7 des Gegenstandes erhält. Dabei legt man ein Modell des Gegenstandes 1 für seine Abstrahlcharakteristik des einfallenden Lichts zugrunde. Ein grundlegendes Modell der Abstrahlcharakteristik ist der sogenannte "Lambertstrahler". Ein Lamberstrahler sendet einfallendes Licht gleichförmig in alle Raumrichtungen aus. Dieses Modell gilt in guter Näherung für diffus reflektierende Objekte. Besonders einfach Verhältnisse liegen vor, wenn man punktförmige Lichtquellen 2 verwendet. Flächige Lichtquellen sind auch möglich und können als Zusammenwirken einer Vielzahl von Punktlichtquellen betrachtet werden. Bei Objekten mit einem Anteil an spiegelnder Reflexion sind verfeinerte Modelle entwickelt worden. Das photometrische Stereoverfahren wird für weitere Stellungen Gi und Ki wiederholt. Die mathematischen und physikalischen Hintergründe sollen hier nicht weiter vertieft werden, entscheidend ist, dass es möglich ist, die Oberflächennormale 5 eines Gegenstandes 1 mit Hilfe von photometrischen Stereoverfahren zu bestimmen.

Als nächstes wird die Methode des sogenannten "binokularen Stereoverfahrens" angewandt. Das bedeutet, dass korrespondierende Bildpunkte 6 in den aufgenommenen Bildern 4 ermittelt werden. Daraus kann man auf die Lage der den Bildpunkten 6 entsprechenden Gegenstandspunkte 7 im Raum schließen. Bisherige Verfahren stützen sich bei der Korrespondenzanalyse meist auf die in den Bildern 4 festgehaltene Lichtintensität. Man setzt dabei voraus, dass korrespondierende Punkte sich durch die gleiche Lichtintensität oder zumindest durch ähnliche Intensitätsmuster bemerkbar machen. Leider ist dies oft nur näherungsweise gegeben und schlägt deshalb häufig fehl. Man kann sagen, dass die Lichtintensität im allgemeinen nicht invariant ist gegenüber der Stellung der Kamera 3, selbst wenn die Lichtquelle 2 nicht bewegt wird. Ähnliches gilt für die Farbeigenschaften.

Ganz anders dagegen verhält es sich mit der Oberflächennormale 5 eines Gegenstandes 1. Sie ist invariant gegenüber der Stellung von Kamera 3 und Lichtquelle 2. Dies ist als ein Hauptvorteil des vorgeschlagenen erfindungsgemäßen Verfahrens zu nennen. Die Korrespondenzanalyse kann wesentlich zuverlässiger durchgeführt werden, da sie sich auf eine stellungsinvariante Größe stützt.

Aus der Korrespondenz von Bildpunkten 6 wird, wie bei binokularen Stereoverfahren üblich, mit Hilfe von geometrische Beziehungen und Kenntnissen von Kameraparametern auf die Lage der zugehörigen Punkte des Objektes im Raum geschlossen. Da im vorgeschlagenen Verfahren eine Vielzahl von Ansichten des Gegenstandes 1 eingehen kann, ist eine Erfassung der Gegenstandsform von weitgehend allen Seiten möglich. Im beschriebenen Stereoverfahren werden alle Ansichten zu einer einzigen dreidimensionalen Ansicht des Gegenstandes 1 vereinigt. Damit wird ein explizites Zusammenfügen von dreidimensionalen Teilbildern wie bei anderen Verfahren umgangen. Die Tatsache, dass eine solche explizite Matchingprozedur umgangen werden kann, ist als ein weiterer entscheidender Vorteil des beschriebenen Verfahrens zu nennen.

Weiter soll noch einmal betont werden, dass das menschliche Auge in der Lage ist, bereits geringste Erhebungen und Einbuchtungen in der Oberfläche eines visualisierten oder realen Gegenstandes zu erkennen. Neben der Lage eines Punktes im Raum kann der Mensch auch die Neigung der Oberfläche aus den Beleuchtungsverhältnissen erschließen. Die Neigung einer Fläche kann als eine Ableitung des Ortes verstanden werden. Geringe Variationen des Ortes können bereits eine große Veränderung der Neigung hervorrufen, wodurch auch kleinste Unregelmäßigkeiten einem menschlichen Beobachter auffallen. Dies ist ein grundsätzliches Problem der meisten Verfahren zur dreidimensionalen Formerfassung. Die Aufnahme von Messdaten ist in den meisten Fällen nicht an diesen Umstand angepasst, so dass schon ein geringes Rauschen der Daten sehr störend für den Betrachter wirkt. Deshalb wird die bereits gewonnene Information der Oberflächennormale 5 neben der Korrespondenzanalyse auch zur einer Verbesserung der dreidimensionalen Messwerte herangezogen. Unvermeidliche Fehler bei der Messung des Ortes werden durch Kenntnis der Oberflächennormalen 5 korrigiert. Dabei werden hauptsächlich Messfehler der Lage von Objektpunkten eliminiert, die Krümmung an jedem Punkt der Oberfläche bleibt aber im wesentlichen erhalten. Damit ist eine drastische Verbesserung der Messgenauigkeit gegenüber binokular arbeitenden Stereoverfahren zu erwarten. Neben einer verbesserten metrischen Genauigkeit ist auch eine verbesserter visueller Eindruck zu erwarten, da der menschliche Gesichtssinn Variationen der Oberflächennormale von dreidimensionalen Objekten sehr genau bewerten kann. Das vorgeschlagenen Verfahren ist daher zugeschnitten auf die speziellen Gegebenheiten des menschlichen Sehens und ermöglicht eine besonders realistische dreidimensionale Visualisierung.

Im folgenden wird anhand von Figur 2 ein Beispiel einer handgeführten Vorrichtung V gegeben, die zur Umsetzung des Verfahrens geeignet ist. Neben einem vorzugsweise magnetisch arbeitenden Lagesensor S und einer CCD-Kamera 3 umfasst die Vorrichtung V drei Lichtleitfasern F, die mit einer externen Lichtquelle verbunden sind (nicht gezeichnet). Die Kamera 3, der Empfänger E des Lagesensors S und die Faserenden F, die somit die Lichtquellen 2 bilden, sind an einer Tragplatte M befestigt, die tragbar ausgebildet sein kann und hierfür vorzugsweise Handgriffe H aufweist. Die Tragplatte M kann auch automatisch bewegt beziehungsweise verlagert werden. Die von der Kamera 3 aufgezeichneten Bilder und die Signale des Lagesensors S werden einer Auswerteeinrichtung A zugeführt und ausgewertet. Diese ist vorzugsweise als Computer ausgebildet, auf dem die Bestimmung der Oberflächennormalen 5 durchgeführt wird, wie dies vorstehend beschrieben ist. Figur 2 zeigt somit eine Vorrichtung V zur Durchführung des erfindungsgemäßen Verfahrens zur optischen Formerfassung.

## Patentansprüche

1. Verfahren zur optischen Formerfassung mindestens eines dreidimensionalen Gegenstandes (1) mit den Schritten:
a) Positionieren des Gegenstandes (1), mindestens einer Lichtquelle (2) und mindestens einer Kamera (3) im Raum in mehreren Stellungen,
b) Erfassen der jeweiligen Stellung des Gegenstandes (Gi), der Lichtquelle (Li) und der Kamera (Ki),
c) Beleuchten des Gegenstandes (1) durch die Lichtquelle (2) in den Stellungen (Gi, Li, Ki),
d) Aufnehmen von Bildern (4) des Gegenstandes (1) in den Stellungen (Gi, Li, Ki),
**gekennzeichnet durch** folgende Verfahrensschritte:
e) Ermitteln der zugehörigen Oberflächennormalen (5) von jeweiligen Objektpunkten (7) des Gegenstandes (1) aus den den Stellungen (Gi, Li, Ki) entsprechenden Bildern (4), wobei zur Ermittlung einer Oberflächennormalen (5) an einem Objektpunkt (7) beim Aufnehmen der Bilder (4) der Blickwinkel konstant gehalten und die Beleuchtungsrichtung verändert wird,
f) Zuordnung korrespondierender Bildpunkte (6) von unter verschiedenen Blickwinkeln aufgenommenen Bildern (4) mit Hilfe der zugehörigen, einander entsprechenden Oberflächennormalen (5),
g) Ermitteln der dreidimensionalen Form des Gegenstandes (1) in den Stellungen (Gi, Li, Ki) mittels der einander entsprechenden Oberflächennormalen (5) von korrespondierenden Bildpunkten (6).

2. Verfahren nach Anspruch 1, **dadurch gekennzeichnet, dass** der Gegenstand (1), die Lichtquelle (2) oder die Kamera (3) von Hand geführt wird.

3. Verfahren nach Anspruch 1, **dadurch gekennzeichnet, dass** der Gegenstand (1), die Lichtquelle (2) oder die Kamera (3) durch eine mechanische Vorrichtung geführt wird.

4. Verfahren nach einem der vorhergehenden Ansprüche, **dadurch gekennzeichnet, dass** die Stellung von Gegenstand (Gi), Lichtquelle (Li) oder Kamera (Ki) mit Hilfe eines zusätzlich Sensors (S) erfasst wird.

5. Verfahren nach Anspruch 4, **dadurch gekennzeichnet, dass** die Stellung mit Hilfe eines photogrammetrischen, eines trägheitsbasierten, Ultraschalloder magnetisch arbeitenden Sensors (S) ermittelt wird.

6. Verfahren nach einem der vorangehenden Ansprüche, **dadurch gekennzeichnet, dass** mindestens drei Lichtquellen (2) verwendet werden.

7. Verfahren nach Anspruch 6, **dadurch gekennzeichnet, dass** die Lichtquellen (2) fest an der Kamera (3) montiert sind.

## Claims

1. Method for optically detecting the shape of at least one three-dimensional object (1) with the steps:
a) positioning of the object (1), of at least one light source (2) and of at least one camera (3) in a space in several positions,
b) recording of the respective position of the object (Gi), of the light source (Li) and of the camera (Ki),
c) illumination of the object (1) by the light source (2) in the positions (Gi, Li, Ki),
d) recording of images (4) of the object (1) in the positions (Gi, Li, Ki),
**characterized by** the following method steps:
e) ascertaining the associated surface normals (5) of respective object points (7) of the object (1) from the images (4) corresponding to the positions (Gi, Li, Ki), wherein for ascertaining a surface normal (5) at an object point (7) during recording of the images (4) the viewing angle is kept constant and the illumination direction is changed,
f) allocation of corresponding image points (6) from images (4) recorded from different viewing angles with the aid of the associated and corresponding surface normals (5),
g) ascertaining the three-dimensional form of the object (1) in the positions (Gi, Li, Ki) by means of the matching surface normals (5) of corresponding image points (6).

2. Method according to Claim 1, **characterized in that** the object (1), the light source (2) or the camera (3) are manually guided.

3. Method according to Claim 1, **characterized in that** the object (1), the light source (2) or the camera (3) are guided by a mechanical device.

4. Method according to one of the previous claims, **characterized in that** the position of the object (Gi), of the light source (Li) or of the camera (Ki) is recorded with the aid of an additional sensor (S).

5. Method according to Claim 4, **characterized in that** the position is ascertained with the aid of a photogrammetric, inertia-based, ultrasonic or magnetically operating sensor (S).

6. Method according to one of the previous claims, **characterized in that** at least three light sources (2) are used.

7. Method according to Claim 6, **characterized in that** the light sources (2) are firmly mounted on the camera (3).

## Revendications

1. Procédé de saisie optique des formes d'au moins un objet tridimensionnel (1) comprenant les étapes :
a) positionnement de l'objet (1), au moins une source lumineuse (2) et au moins une caméra (3) pouvant prendre plusieurs positions dans l'espace,
b) saisie des positions respectives de l'objet (Gi), de la source lumineuse (Li) et de la caméra (Ki),
c) éclairage de l'objet (1) par la source lumineuse (2) dans les positions (Gi, Li, Ki),
d) enregistrement d'images (4) de l'objet (1) dans les positions (Gi, Li, Ki),
**caractérisé par** les étapes de procédé suivantes :
e) détermination des normales à la surface (5) issues des points respectifs (7) de l'objet (1) à partir des images (4) correspondant aux positions (Gi, Li, Ki), sachant que pour déterminer une normale à la surface (5) en un point (7) de l'objet lors de l'enregistrement des images (4), l'angle de visée est maintenu constant et la direction de l'éclairage est modifiée,
f) classement de points (6) correspondants d'images enregistrées (4) sous différents angles de visée à l'aide des normales à la surface (5) dont elles sont issues et correspondant les unes aux autres,
g) détermination de la forme tridimensionnelle de l'objet (1) dans les positions (Gi, Li, Ki) au moyen des normales à la surface (5) correspondant les unes aux autres et issues de points d'image (6) correspondants.

2. Procédé selon la revendication 1, **caractérisé en ce que** l'objet (1), la source lumineuse (2) ou la caméra (3) est guidé(e) à la main.

3. Procédé selon la revendication 1, **caractérisé en ce que** l'objet (1), la source lumineuse (2) ou la caméra (3) est guidé(e) par un dispositif mécanique.

4. Procédé selon l'une des revendications précédentes, **caractérisé en ce que** la position de l'objet (Gi), de la source lumineuse (Li) ou de la caméra (Ki) est saisie par une capteur additionnel (S).

5. Procédé selon la revendication 4, **caractérisé en ce que** la position est déterminée au moyen d'un capteur (S) photogrammétrique, inertiel, travaillant par ultrasons ou magnétisation.

6. Procédé selon l'une des revendications précédentes, **caractérisé en ce qu'**au moins trois sources lumineuses (2) sont utilisées.

7. Procédé selon la revendication 6, **caractérisé en ce que** les sources lumineuses (2) sont montées de manière fixe sur la caméra (3).
